# EUROPEAN PATENT APPLICATION

(11) **EP 4 202 277 A1**
(43) Date of publication of application: **28.06.2023**
(21) Application number: 22215354.6
(22) Date of filing: 21.12.2022
(51) Int. Cl.: F16L 9/147, F16L 59/14, H02G 1/10, E02B 17/00, H02G 15/007

(54) **A CABLE PROTECTION ARRANGEMENT**

(30) Priority: 22.12.2021 SE 2151592
(71) Applicant: Vattenfall AB, 169 92 Stockholm (SE)
(72) Inventor: KADUREK, Petr, 29690 Gilten (DE)
(74) Representative: Zacco Sweden AB

(57) **Abstract**

The invention relates to a cable protection arrangement (1) for an offshore structure (2), said arrangement (1) comprising: a flexible cover element (4) configured to at least partly surround a cable (6); wherein the flexible cover element (4) is configured to define a space (8) between an inner surface (10) of the flexible cover element (4) and the cable (6); and wherein the cable protection arrangement (1) further comprises a stiffener element (12) in the defined space (8) between the inner surface (10) of the flexible cover element (4) and the cable (6), wherein the stiffener element (12) is transformable from a flexible condition to a stiff condition. The invention further relates to an offshore structure (2) and a method for connecting a cable (6) provided with a cable protection arrangement (1) to an offshore structure (2).

## Description

### Technical field

The present disclosure relates to a cable protection arrangement for an offshore structure, an offshore structure and a method for connecting a cable provided with a cable protection arrangement to an offshore structure.

### Background

The undersea cables or inter array cables are used in offshore structures as offshore wind farms. Such cables can be high-voltage or medium-voltage cables. Undersea cables are exposed to the forces of nature to a large extent and they are therefore arranged in a cable protection system on the seabed outside of a foundation for a wind turbine. The cable protection system is configured to protect the undersea cable on the seabed and on the way to a connection unit, which is located in the wind turbine foundation. In addition to the cable protection system, additional protection may be needed on the seabed, such as stones and geotextile mat, against possible scouring. Additional shells or tubes are arranged on the cable protection system at the area where the cable enters the wind turbine foundation.

The undersea cable extends on the seabed and further through a wall opening in the wind turbine foundation to the connection unit. When the undersea cable is to be connected into the wind turbine, the cable is protected from over-bending and jamming during pull-in. Also, the cable is protected against dynamic forces during the pull-in operation and afterwards. The installation of the cable must also be fast and safe and have a low risk of failure.

A cable laying vessel is used for installing the undersea cable on the seabed and for the pull-in operation into the wind turbine foundation for connecting the cable to the connection unit. The installation of the cable in the cable protection system may be prepared on the deck of the cable laying vessel. Further, the cable protection system is flexible in order to facilitate the installation of the cable and for the pull-in operation into the wind turbine foundation or similar structure.

Documents EP1985845 B1 and EP2869564 disclose prior art cable pull-in systems for offshore structures.

### Summary

A problem with the known solutions is that the cable protection systems do not provide a proper dynamic protection during operation and for problematic vibrations and scour conditions. The flexibility of the cable protection systems needed for proper and easy installation of the cables may during operation result in wear and fatigue of the cable protection system due to movements of the cable together with the cable protection system. Typically, there is a potential risk that the cable protection system brakes at the position where the cable entering the fixed structure of wind turbine or similar structure and at the position where the cable rises from the seabed in order to entering the wind turbine.

It is an object of the present disclosure to mitigate, alleviate or eliminate one or more of the above-identified deficiencies and disadvantages in the prior art and solve at least the above mentioned problem.

According to an aspect there is provided a cable protection arrangement for an offshore structure. The arrangement comprising a flexible cover element configured to at least partly surround a cable, wherein the flexible cover element is configured to define a space between an inner surface of the flexible cover element and the cable. The cable protection arrangement further comprises a stiffener element in the defined space between the inner surface of the flexible cover element and the cable, wherein the stiffener element is transformable from a flexible condition to a stiff condition.

Such a cable protection arrangement provides a proper dynamic protection during operation and problematic scouring conditions. The cable protection arrangement has the flexibility needed for proper and easy installation of the cables on the seabed and to the offshore structure. After installation, the stiffener element is transformable from a flexible condition to a stiff condition. The stiff condition of the stiffener element results in restricted movements of the flexible cover element and also of the cable, which reduces wear and fatigue of the flexible cover element and the cable. The reduction of wear and fatigue of the flexible cover element and the cable reduces the risk that the cable protection system brakes at the position where the cable entering the structure and at the position where the cable rises from the seabed in order to entering the structure.

The cable protection arrangement provides an easy installation using cable laying vessels since the cable protection arrangement is flexible for pull-in operation during installation. After installation the cable protection arrangement shall be stiff, strong and with minimal movements to withstand the environmental influence and protect the cable. The desired stiffness of the stiffening element in the stiff condition may be controlled. The transformable characteristics of the stiffener element from the flexible condition to the stiff condition also results in that cables provided with the flexible cover element of a considerable length can be installed on the seabed and to the wind turbine.

The cable protection arrangement is configured to protect the cable from external influence, which may lead to fatigue and braking of the cable. The cable protection arrangement is configured to constitute a support for the cable along its extension on the seabed and in to the wind turbine or substation structure. The cable protection arrangement is configured to constitute a support for the cable during handling and installation of the cable on the seabed and to the wind turbine or substation structure.

The offshore structure may be a monopile for a wind turbine, configured to be installed in a seabed. However, the offshore structure may be any type of structure at sea, which should be connected to a cable. The area of the seabed adjacent to the offshore structure may be reinforced. The reinforcement of the seabed may have a flat configuration and extend above the surface of the seabed.

The flexible cover element is configured to at least partly surround the cable. The flexible cover element may comprise a shell or a jacket. A number of shells may together constitute the flexible cover element. The flexible cover element may surround the cable in the circumferentially direction of the cable. The cable has a length, which exceeds the length of the flexible cover element. The flexible cover element may be of any type of material having flexible properties and also properties to withstand the aggressive environment at the seabed.

The defined space is created between the inner surface of the flexible cover element and the cable. The defined space has a shape defined by the shape of the flexible cover element and the cable. The defined space may have a cylinder shape. The defined space is configured to accommodate the stiffener element. The inner surface of the flexible cover element may be smooth or may have a texture.

The stiffener element may be any type of element that can be transformable from a flexible condition to a stiff condition. The stiffener element may thus be a mechanical, an electrical and/or a chemical element. The mechanical element may be transformable from a flexible condition to a stiff condition. The electrical element may be transformable from a flexible condition to a stiff condition. The chemical element may be transformable from a flexible condition to a stiff condition. In the flexible condition the stiffener element may be able to resist only moderate forces acting on the cable or on the flexible cover element. In the stiff condition the stiffener element may be able to resist large forces acting on the cable or on the flexible cover element. The transformation from the flexible condition to the stiff condition may be activated and performed in a controlled manner. The transformation from the flexible condition to the stiff condition may be activated and performed by mechanical, electrical and/or chemical means.

According to an example, an activating element is configured to stiffen the stiffener element. The stiffener element may be any type of element that can be transformable from a flexible condition to a stiff condition. The stiffener element may comprise the activating element. The stiffener element may together with the activating element be arranged or introduced in the defined space between the inner surface of the flexible cover element and the cable. Alternatively or in combination, the activating element may be separated from the stiffener element, wherein the stiffener element first is introduced into the defined space, and wherein the activating element thereafter is added to the stiffener element for stiffen the stiffener element. The stiffener element may thus be a mechanical, an electrical and/or a chemical element. The mechanical stiffener element may be transformable from a flexible condition to a stiff condition by an activating element such as an actuator acting on the mechanical element with a force. The mechanical stiffener element may be a wire, rod and/or a spring. The electrical stiffener element may be transformable from a flexible condition to a stiff condition by an activating element, such as a power source for electric power. The electrical stiffener element may be an electro magnet. The electrical stiffener element may be an electrically conductive substance, which may be transformable from a flexible condition to a stiff condition when exposed to the activating element, such as electric power. The chemical stiffener element may be transformable from a flexible condition to a stiff condition, which may be activated by an activating element, such as a curable substance acting on the chemical stiffener element.

According to an example, the stiffener element comprises a curable substance as an activating element for transforming the stiffener element to the stiff condition. The curable substance may be selected for controllable curing of the stiffener element. During the installation of the cable on the seabed and to the monopile the curing of the stiffener element slowly takes place. The curing process is completed after the installation of the cable. Thus, the cable protection arrangement will have the flexibility needed for proper and easy installation of the cable on the seabed and to the monopile, and after the installation the stiffener element will be transformed by the curable substance to the stiff condition by curing. The stiffener element thus comprises a curable substance and is transformable from a flexible condition to a stiff condition by curing. The curable substance may be the activating element for transforming the stiffener element from the flexible condition to the stiff condition. The stiffener element may together with the curable substance be arranged or introduced in the defined space between the inner surface of the flexible cover element and the cable. Alternatively or in combination, the curable substance may be separated from the stiffener element, wherein the stiffener element first is introduced into the defined space, and wherein the curable substance thereafter is added to the stiffener element for stiffen the stiffener element.

According to an example, the stiffener element is a shotcrete, a glass fibre and/or a carbon fibre reinforcement. Thermal properties, curing time and desired stiffness could be easily controlled when using shotcrete, glass fibre and/or carbon fibre reinforcement as stiffener element. The stiffener element may thus comprise a shotcrete, a glass fibre and/or a carbon fibre reinforcement, which by an activating element, such as a curable substance, is curable to a stiff condition.

According to an example, the stiffener element is a mechanical element and/or an electrical element. The mechanical stiffener element may be transformable from a flexible condition to a stiff condition by an activating element such as an actuator acting on the mechanical element with a force. The mechanical element may be a wire, rod and/or a spring. The electrical stiffener element may be transformable from a flexible condition to a stiff condition by an activating element, such as a power source for electric power. The electrical element may be an electro magnet. The electrical element may be an electrically conductive substance, which may be transformable from a flexible condition to a stiff condition when exposed to the activating element, such as electric power.

According to an example, the flexible cover element comprises a flexible tube. The flexible tube is configured to surround the cable in the circumferentially direction of the cable. The cable has a length, which exceeds the length of the flexible tube. The flexible tube may be of any type of material having flexible properties and also properties to withstand the aggressive environment at the seabed.

According to an example, the defined space is arranged between the inner surface of the flexible tube and an outer surface of the cable. The defined space has a shape defined by the shape of the inner surface of the flexible tube and the outer surface of the cable. The defined space may have a cylinder shape. The defined space is configured to accommodate the stiffener element. The inner surface of the flexible tube may be smooth or may have a texture.

According to an example, two flexible tubes are arranged in a concentric configuration to each other, and wherein the defined space is arranged between the inner surface of an outer flexible tube and an outer surface of an inner flexible tube. This configuration of the two tubes defines a space between the tubes, which may accommodating the stiffener element. The volume of the defined space may be controlled by selecting the inner diameter of the outer flexible tube and/or the outer diameter of the inner flexible tube. Distance elements may be arranged in the defined space between the two tubes. The distance elements may have a shape which affects the shape of the defined shape.

According to an example, the inner flexible tube has an inner diameter, which is larger than an outer diameter of the cable. This configuration allows movement of the cable within the inner flexible tube. In addition, this configuration may allow generated heat in the cable to dissipate from the cable.

According to an example, radially directed channels are arranged through the outer flexible tube, the defined space and the inner flexible tube. When installed on the seabed an in to the monopile, the seawater which surrounds the outer flexible tube may flow in and out of the radially directed channels and cool down the cable. Thus, the seawater will get in touch with the outer surface of the cable arranged in the inner flexible tube. Such cable protection arrangement will provide a good heat exchange with the environment. A cable protection arrangement provided with radially directed channels may be produced by use of 3D manufacturing/printing technologies.

According to an aspect there is provided an offshore structure, connected to a cable comprising a cable protection arrangement, wherein the offshore structure comprises a monopile configured to be installed in a seabed. The offshore structure may be a monopile for a wind turbine, configured to be installed in a seabed. However, the offshore structure may be any type of structure at sea, which should be connected to a cable. The cable may supply power from and to the offshore structure and/or equipment arranged at the offshore structure. In addition, the cable may transmit signals, such as communication signals, from and to the offshore structure and/or equipment arranged at the offshore structure. The cable may extend through a wall opening in the monopile to a connection unit within the monopile. The wall opening in the monopile may be arranged at a height within a range of about 3,5 meters to about 5 meters above the seabed. The wall opening in the monopile may however be arranged at a height outside this range. Further, the wall opening may be configured to receive the cable under an angle of about 40° to the monopile from the side of the seabed diagonally upwards. The wall opening may however be configured to receive the cable under a different angle than 40°. Since the cable protection arrangement is configured to constitute a support for the cable along its extension on the seabed, from the seabed and further through the wall opening in the monopile, the wall opening in the monopile may be arranged at a height above this range and the wall opening may be configured to receive the cable under a different angle than 40°.

According to an aspect there is provided a method for connecting a cable provided with a cable protection arrangement to an offshore structure. The method comprises the steps of insertion the cable in a flexible cover element, connecting the cable to the offshore structure, and stiffening the flexible cover element by a stiffener element. The insertion the cable in a flexible cover element may be performed at a cable laying vessel, which is used for installing the undersea cable on the seabed and for the pull-in operation into the monopile for connecting the cable to the connection unit. The installation of the cable in the flexible cover element may be prepared on the sea deck of the cable laying vessel. At this step, the flexible cover element is allowed to flex and bend in order to facilitate the installation of the cable and for the pull-in operation into the monopile. The step of connecting the cable to the offshore structure comprises a mechanical connection by forwarding the cable with the flexible cover element from the cable laying vessel, to the offshore structure and to a connection unit at the offshore structure, which may be arranged within the offshore structure. At the connection unit the cable is electrically connected to the offshore structure and/or equipment at the offshore structure. Such equipment may be a generator driven by a wind turbine. The step of stiffening the flexible cover element by a stiffener element may be performed within or after a predetermined time or a predetermined time interval. The transformation from the flexible condition to the stiff condition may be activated and performed in a controlled manner. The transformation from the flexible condition to the stiff condition may be activated and performed by mechanical, electrical and/or chemical means. The stiffener element will abut or bear on the inner surface of the flexible cover element. When the stiffener element transforms to the stiff condition, the flexible cover element cannot bend or flex. The stiffener element will be rigid in the stiff condition and will therefore prevent the flexible cover element to bend or flex. The flexible cover element will as a result assume a rigid state due to the rigid state of the stiffener element.

According to an example, the step of connecting the cable to the offshore structure is preceded by the step of: insertion of a stiffener element in a defined space between an inner surface of the flexible cover element and the cable. The stiffener element may be any type of element that can be transformable from a flexible condition to a stiff condition. The stiffener element may be a mechanical, an electrical and/or a chemical element, which is inserted into the defined space between an inner surface of the flexible cover element and the cable. During insertion, the stiffener element may have a flexible condition. In case the stiffener element is a chemical element, such as a chemical substance or a composition of different chemical substances, the chemical element may be injected into the defined space.

According to an example, the step of stiffening the flexible cover element by a stiffener element comprises curing the stiffener element by a curable substance. The curable substance may be selected for controllable curing of the stiffener element. In this case the stiffener element is a chemical element, such as a chemical substance or a composition of different chemical substances. The curable substance may be injected into the defined space in which the stiffener element in form of a chemical element already has been injected. Alternatively, the chemical element may be blended with the curable substance before injecting them together into the defined space. During the installation of the cable on the seabed and to the monopile the curing of the stiffener element slowly takes place. The curing process is completed within or after a predetermined time or a predetermined time interval. The curing process is completed after the installation of the cable.

The present disclosure will become apparent from the detailed description given below. The detailed description and specific examples disclose examples of the disclosure by way of illustration only. Those skilled in the art understand from guidance in the detailed description that changes and modifications may be made within the scope of the disclosure.

Hence, it is to be understood that the herein disclosed disclosure is not limited to the particular component parts of the device described or steps of the methods described since such device and method may vary. It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context explicitly dictates otherwise. Thus, for example, reference to "a unit" or "the unit" may include several devices, and the like. Furthermore, the words "comprising", "including", "containing" and similar wordings does not exclude other elements or steps.

### Brief description of the drawings

The above objects, as well as additional objects, features and advantages of the present disclosure, will be more fully appreciated by reference to the following illustrative and non-limiting detailed description of examples of the present disclosure, when taken in conjunction with the accompanying drawings.
Figure 1 schematically illustrates in a sectional view, a cable protection arrangement for an offshore structure according to an example;
Figures 2 - 4 schematically illustrate in views of perspective, cable protection arrangements according to different examples;
Figures 5a and 5b schematically illustrate how stiffener elements are applied to a cable protection arrangement according to an example; and
Figures 6a and 6b show flowcharts of a method according to an example.

### Detailed description

The present disclosure will now be described with reference to the accompanying drawings, in which examples of the disclosure are shown. The disclosure may, however, be embodied in other forms and should not be construed as limited to the herein disclosed examples. The disclosed examples are provided to fully convey the scope of the disclosure to the skilled person.

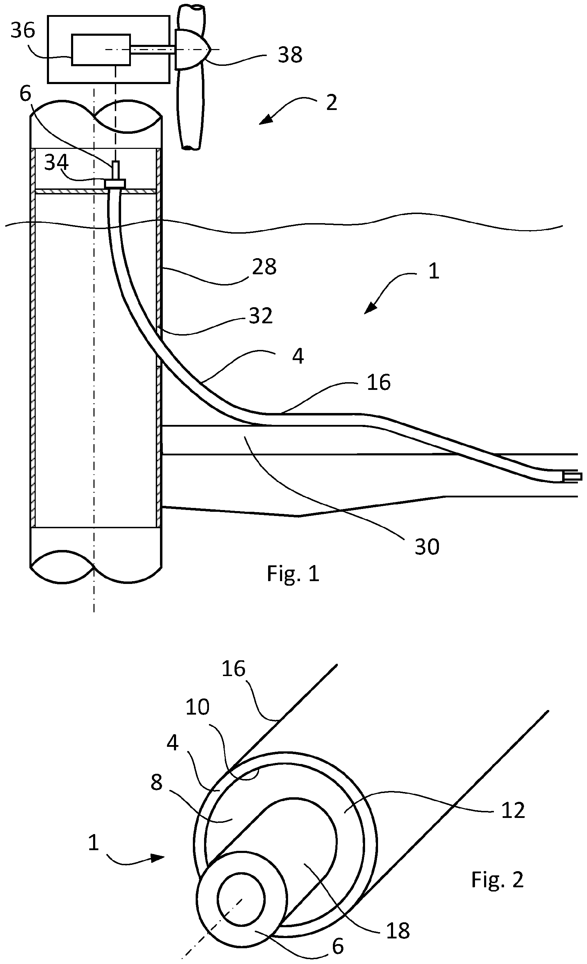

Figures 1 and 2 show a cable protection arrangement 1 for an offshore structure 2. The cable protection arrangement 1 comprises a flexible cover element 4 configured to at least partly surround a cable 6. The flexible cover element 4 is configured to define a space 8 between an inner surface 10 of the flexible cover element 4 and the cable 6. The cable protection arrangement 1 further comprises a stiffener element 12 in the defined space 8 between the inner surface 10 of the flexible cover element 4 and the cable 6. In fig. 1 the offshore structure 2 is a monopile 28 for a wind turbine installed in a seabed 30. The cable 6 extends on and in the seabed 30 and further through a wall opening 32 in the monopile 28 to a connection unit 34 within the monopile 28. The cable 6 is further connected to an electrical drive train 36 driven by the wind turbine 38. The wall opening 32 in the monopile 20 may be arranged at a height within a range of about 3,5 meters to about 5 meters above the seabed 30. Further, the wall opening 32 is configured to receive the cable 6 under an angle of about 40° to the monopile 20 from the side of the seabed 30 diagonally upwards.

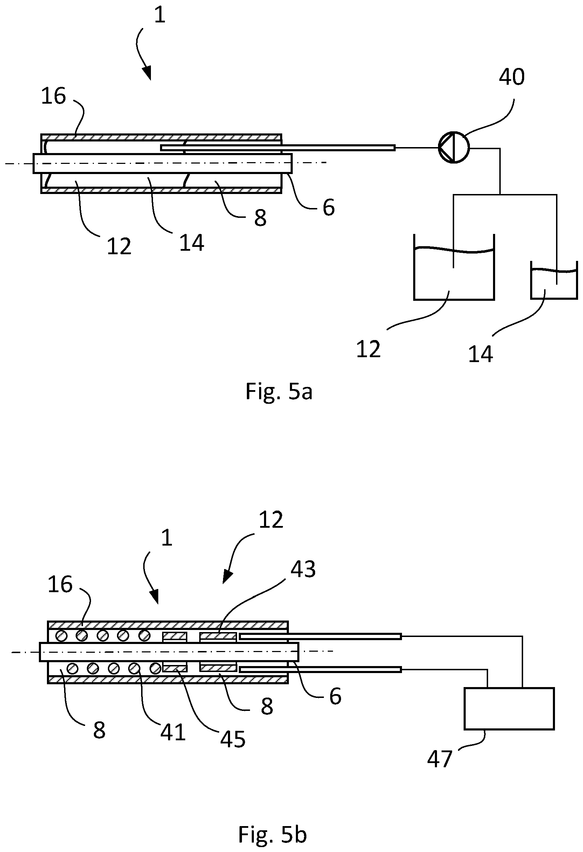

In fig. 2 the cable with the flexible cover element 4 and the stiffener element 12 is shown in a view of perspective. The stiffener element 12 is a chemical substance, such as a shotcrete, a glass fibre and/or a carbon fibre reinforcement. The stiffener element 12 is transformable from a flexible condition to a stiff condition. The stiffener element 12 may be transformable to the stiff condition by adding a curable substance 14 as an activating element (see fig. 5). The flexible cover element 4 comprises a flexible tube 16 and the defined space 8 is arranged between the inner surface 10 of the flexible tube 16 and an outer surface 18 of the cable 6.

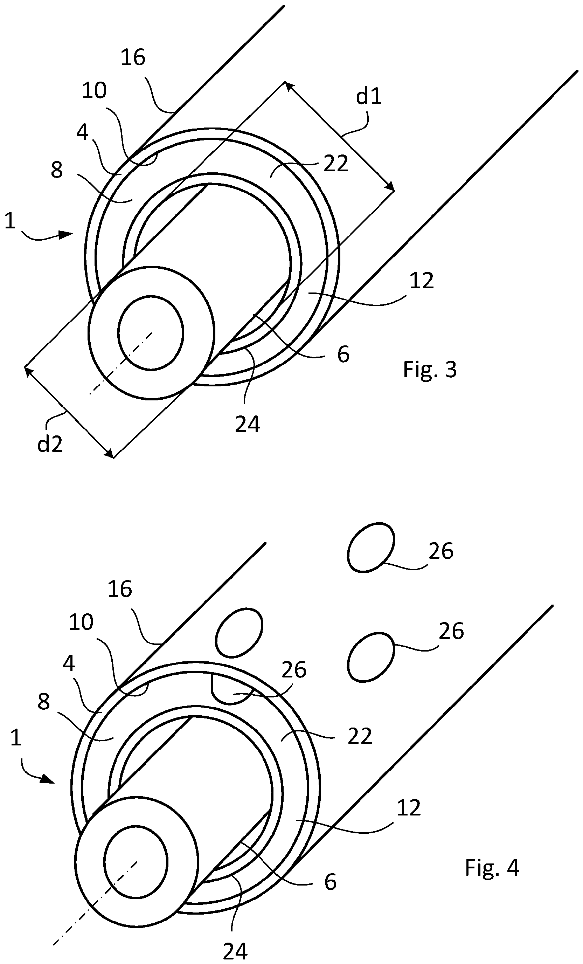

In fig. 3 two flexible tubes 16, 20 are arranged in a concentric configuration to each other, and wherein the defined space 8 is arranged between the inner surface 10 of an outer flexible tube 16 and an outer surface 22 of an inner flexible tube 24. The inner flexible tube 24 has an inner diameter d1, which is larger than an outer diameter d2 of the cable 6.

In fig. 4 two flexible tubes 16, 20 are arranged in a concentric configuration to each other. The defined space 8 is arranged between the inner surface 10 of the outer flexible tube 16 and the outer surface 22 of the inner flexible tube 24. Radially directed channels 26 are arranged through the outer flexible tube 16, the defined space 8 and the inner flexible tube 24. The inner flexible tube 24 has an inner diameter d1, which is larger than an outer diameter d2 of the cable 6.

Fig. 5a shows in a schematic view how the stiffener element 12 in the form of a chemical substance is injected into the defined space 8. The curable substance 14 is injected into the defined space 8 together with the stiffener element 12. A pump 40 or feeder brings the stiffener element 12 and the curable substance from separate depots 42, 44 and injects the blended stiffener element 12 and the curable substance 14 into the space 8 defined between the flexible tube 16 and the cable 6.

Fig. 5b shows in a schematic view how the stiffener element 12 in the form of a mechanical element and an electrical element arranged in the defined space 8. The mechanical element is a spring 41. The electrical element is an electro magnet 43. The spring 41 may be transformable from a flexible condition to a stiff condition by force from an actuator 45 acting as the activating element. The electro magnet 43 may be transformable from a flexible condition to a stiff condition by electric power from a power source 47 acting as the activating element.

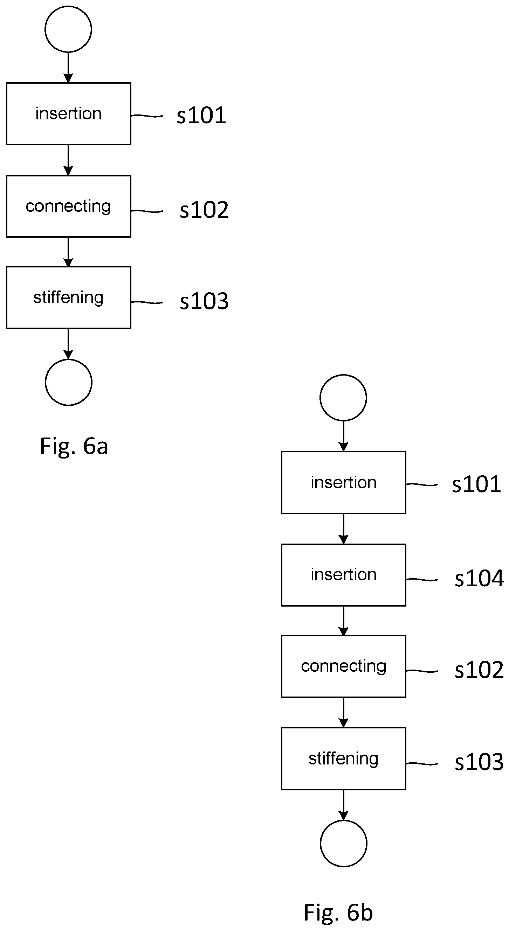

Fig. 6a shows a flowchart of a first example of a method for connecting a cable to an offshore structure 2. The method relates to the arrangement 1 disclosed in figures 1-5. The method comprises the steps of: insertion s101 the cable 6 in a flexible cover element 4; connecting s102 the cable 6 to the offshore structure 2; and stiffening s103 the flexible cover element 4 by a stiffener element 12.

Fig. 6b shows a flowchart of a second example of a method for connecting a cable to an offshore structure 2. The method relates to the arrangement 1 disclosed in figures 1-5. The step of connecting the cable 6 to the offshore structure 2 is preceded by the step of insertion s104 of a stiffener element 12 in a defined space 8 between an inner surface 10 of the flexible cover element 4 and the cable 6.

The step of stiffening s103 the flexible cover element 4 by a stiffener element 12 comprises curing in the stiffener element 12 by a curable substance 14.

The person skilled in the art realizes that the present disclosure is not limited to the examples described above. The person skilled in the art further realizes that modifications and variations are possible within the scope of the appended claims. Additionally, variations to the disclosed examples can be understood and effected by the skilled person in practicing the claimed disclosure, from a study of the drawings, the disclosure, and the appended claims.

## Claims

1. A cable protection arrangement (1) for an offshore structure (2), said arrangement (1) comprising:
a flexible cover element (4) configured to at least partly surround a cable (6);
wherein the flexible cover element (4) is configured to define a space (8) between an inner surface (10) of the flexible cover element (4) and the cable (6); and
wherein the cable protection arrangement (1) further comprises a stiffener element (12) in the defined space (8) between an inner surface (10) of the flexible cover element (4) and the cable (6), wherein the stiffener element (12) is transformable from a flexible condition to a stiff condition.

2. The arrangement (1) according to claim 1, wherein an activating element (14, 43, 45) is configured to stiffen the stiffener element (12).

3. The arrangement (1) according to any one of the claims 1 - 2, wherein the stiffener element (12) comprises a curable substance (14) as an activating element for transforming the stiffener element (12) to the stiff condition.

4. The arrangement (1) according to any one of the claims 1 - 3, wherein the stiffener element (12) is a shotcrete, a glass fibre and/or a carbon fibre reinforcement.

5. The arrangement (1) according to claim 1, wherein the stiffener element (12) is a mechanical element and/or an electrical element.

6. The arrangement (1) according to any one of the preceding claims, wherein the flexible cover element (4) comprises a flexible tube (16).

7. The arrangement (1) according to claim 6, wherein the defined space (8) is arranged between the inner surface (10) of the flexible tube (16) and an outer surface (18) of the cable (6).

8. The arrangement (1) according to claim 6, wherein two flexible tubes (16, 24) are arranged in a concentric configuration to each other, and wherein the defined space (8) is arranged between the inner surface (10) of an outer flexible tube (16) and an outer surface (22) of an inner flexible tube (24).

9. The arrangement (1) according to claim 8, wherein the inner flexible tube (24) has an inner diameter (d1), which is larger than an outer diameter (d2) of the cable (6).

10. The arrangement (1) according to any one of claims 8 and 9, wherein radially directed channels (26) are arranged through the outer flexible tube (16), the defined space (8) and the inner flexible tube (24).

11. An offshore structure (2), connected to a cable (6) comprising a cable protection arrangement (1) according to any one of the preceding claims, wherein the offshore structure (2) comprises a monopile (28) for a wind turbine (38), configured to be installed in a seabed (30).

12. A method for connecting a cable (6) provided with a cable protection arrangement (1) to an offshore structure (2) according to claim 11, wherein the method comprises the steps of:
insertion (s101) the cable (6) in a flexible cover element (4);
connecting (s102) the cable (6) to the offshore structure (2); and
stiffening (s103) the flexible cover element (4) by a stiffener element (12).

13. The method according to claim 12, wherein the step of connecting the cable (6) to the offshore structure (2) is preceded by the step of:
insertion (s104) of a stiffener element (12) in a defined space (8) between an inner surface (10) of the flexible cover element (4) and the cable (6).

14. The method according to any one of the claims 12 and 13, wherein the step of stiffening (s103) the flexible cover element (4) by a stiffener element (12) comprises activating an activating element (14, 43, 45) for stiffening the stiffener element (12).

15. The method according to any one of the claims 13 - 14, wherein the step of stiffening (s103) the flexible cover element (4) by a stiffener element (12) comprises curing the stiffener element (12) by a curable substance (14) as an activating element for transforming the stiffener element (12) to the stiff condition.
